# EUROPEAN PATENT APPLICATION

(11) **EP 2 028 679 A2**
(43) Date of publication of application: **25.02.2009**
(21) Application number: 08252727.6
(22) Date of filing: 18.08.2008
(51) Int. Cl.: H01J 61/32, H01J 61/33

(54) **Fluorescent lamp tube**

(30) Priority: 22.08.2007 CN 200720128889 U
(71) Applicant: Mass Technology (H.K.) Ltd., Kowloon, Hong Kong (HK)
(72) Inventor: Foo, Onn Fah, Tsimshatsui Kowloon, Hong-Kong (HK)
(74) Representative: Prentice, Raymond Roy

(57) **Abstract**

A new type of fluorescent lamp tube for illumination, comprises lamp filaments (101) arranged respectively at both ends of the fluorescent lamp tube; tube end portions (102) in which the lamp filaments (101) are enclosed respectively; and a tube portion (104) interconnecting the tube end portions (102) and having a diameter smaller than that of the tube end portions (102). The present invention breaks through the prior art, such that the lamp tube can be devised to be more compact, whereby realizing a T1-type hot cathode fluorescent lamp.

## Description

The present invention relates to a fluorescent lamp tube for illumination, and more particularly to a hot cathode fluorescent lamp tube of a small diameter.

A fluorescent lamp tube is a new, low pressure gas discharge type of electric light source, which is widely adapted for indoor and outdoor ambient lighting for various technical features it possesses, such as high lighting efficiency, great energy saving and colour developing ability, and the like. Since its debut in the early 90's of the last century, owing to its excellent characteristics - such as small size, simple configuration, high surface brightness, low temperature rise, easy to process into various shapes and long lifespan - the cold cathode fluorescent lamps have been quickly and widely adopted as backlights in various devices, such as scanners. A conventional fluorescent lamp used in our daily life is a low pressure hot cathode arc discharge lamp, wherein at both ends of which the electrodes are relatively hot; as a hot cathode fluorescent lamp, it is characterized by its high lighting efficiency. However, the existing hot cathode fluorescent lamp tubes are formed from glass tubes of uniform diameter and conventional lamp filaments, wherein the outer diameter of the lamp tubes are generally over 6.4 mm (T2-type). T1-type (with outer diameter around 3.2mm) fluorescent lamp tubes cannot be realized with conventional manufacturing process as the lamp filaments cannot be adapted to it at the current engineering level, whereby one might only attempt to break through the issue by modifying the lamp tube of the fluorescent lamp.

The aim of the present invention is to overcome the above defects by providing a super compact T1-type fluorescent lamp tube employing the existing lamp filaments.

Accordingly, the present invention provides a fluorescent lamp tube which comprises lamp filaments arranged respectively at both ends of the fluorescent lamp tube; tube end portions in which the lamp filaments are enclosed respectively and a tube portion interconnecting the tube end portions and having a diameter smaller than that of the tube end portions.

According to an embodiment of the present invention, each tube end portion and the tube portion are connected via respective connecting portions having a diameter gradually diminished from the tube end portions to the tube portion.

According to another embodiment of the present invention, the diameter of the tube end portions equals that of a conventional fluorescent lamp tube.

According to still another embodiment of the present invention, the diameter of the tube portion ranges from 2 mm to 12 mm.

According to yet another embodiment of the present invention, the tube portion is in a form selected from a group consisting of linear type, U-type, II-type, H-type, Buddha's Hand-type, W-type, SL-type and spiral type of lamp tube.

Compared with the prior art, the advantageous effect of the present invention lies in that: via a connecting portion the tube end portion can directly connect with the tube portion, namely a T1-type fluorescent lamp tube. In this regard, the present invention surpasses the conventional technologies, and by means of which normal lamp filaments can be received thereinto and a super compact T1-type fluorescent lamp tube becomes possible, whereby a fluorescent lamp can be devised to be more compact, then the miniaturization of the fluorescent lamp is realized.

The present invention will now be described in detail with reference to the drawings, in which:-
Figure 1 is a part-sectional elevation of a first embodiment of a lamp tube according the present invention;
Figure 2 is a part-sectional elevation of a second embodiment of a lamp tube according to the present invention; and
Figure 3 is a part-sectional elevation of a third embodiment of a lamp tube according to the present invention.

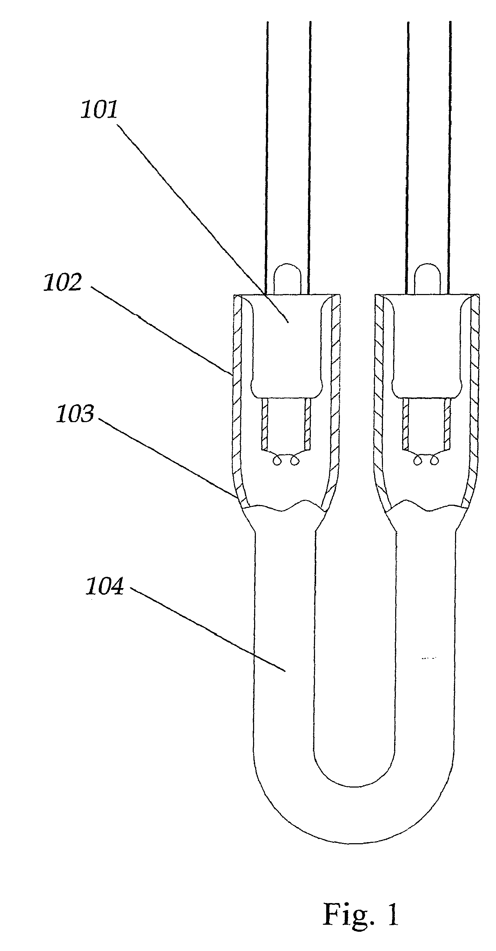

Referring to Figure 1 of the drawings, a fluorescent lamp tube of the present invention comprises a tube end portion 102 in which a lamp filament 101 is enclosed. A U-type tube portion 104 connects with the tube end portion 102 via a connecting portion 103 which is gradually reduced from the tube end portion to the tube portion, wherein the diameter of the U-type tube portion 104 is in the range of 2-12 mm, and the diameter of the tube end portion 102 equals that of a conventional fluorescent lamp tube and is greater than that of the U-type tube portion 104, while the value of the diameter might be determined as required. The U-type tube portion 104 is substantially the luminescent component thereof, and both the tube end portion 102 and U-type tube portion 104 are formed from glass tubes.

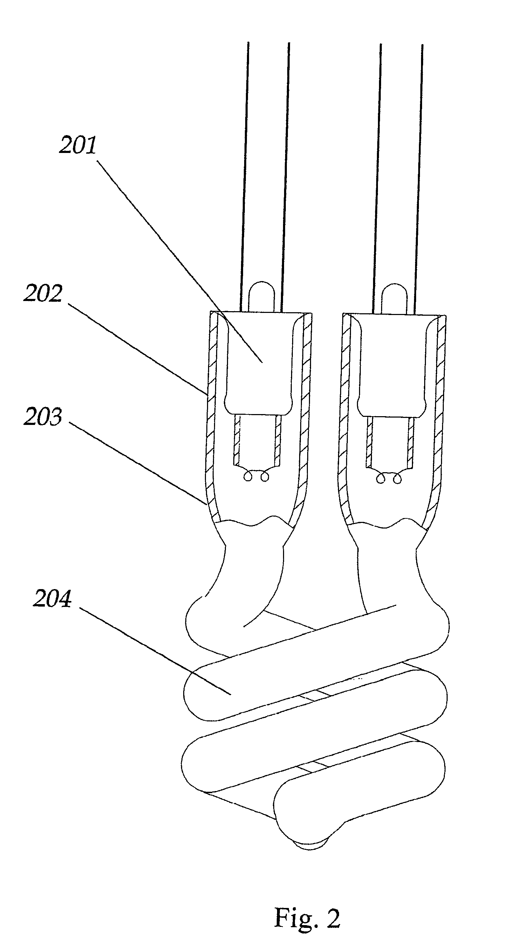

Referring to Figure 2 of the drawings, a fluorescent lamp tube of the present invention comprises a tube end portion 202 in which a lamp filament 201 is enclosed. A spiral type tube portion 204 connects with the tube end portion 202 via a connecting portion 203 which is gradually reduced from the tube end portion to the tube portion, wherein the diameter of the spiral type tube portion 204 is in the range of 2-12 mm, while the diameter of the tube end portion 202 equals that of a conventional fluorescent lamp tube and is greater than that of the spiral type tube portion 204, and the value of the diameter might be determined as required. The spiral type tube portion 204 is the actual luminescent portion, and both the tube end portion 202 and spiral type tube portion 204 are formed from glass tubes.

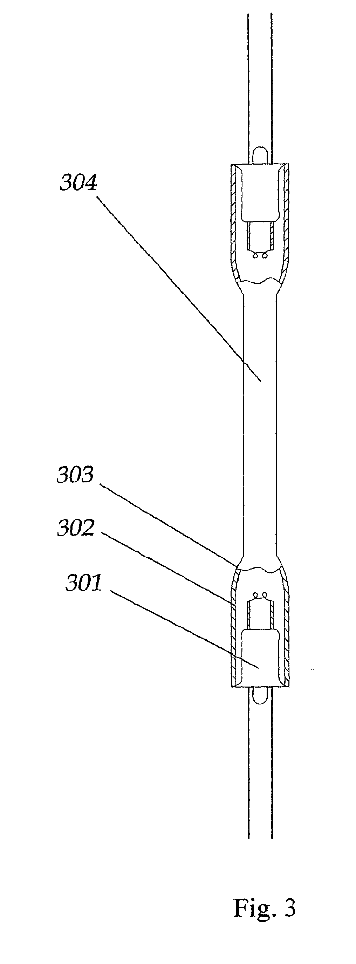

Referring to Figure 3 of the drawings, a fluorescent lamp tube of the present invention comprises a tube end portion 302 in which a lamp filament 301 is enclosed. A linear type tube portion 304 connects with the tube end portion 302 via a connecting portion 303 which is gradually reduced from the tube end portion to the tube portion, wherein the diameter of the linear type tube portion 304 is in the range of 2-12 mm, while the diameter of the tube end portion 302 equals that of a conventional fluorescent lamp tube and is greater than that of the linear type tube portion 304, and the value of the diameter might be determined as required.

The linear type tube portion 304 is the luminescent portion, and the tube end portion 302 and linear type tube portion 304 are both formed from glass tubes.

It should be appreciated that the above embodiments are merely provided for illustrating but not limiting the design claimed by the present invention. The tube portion of the present invention might be in a form selected from a group consisting of linear type, U-type, II-type, H-type, Buddha's Hand-type, W-type, SL-type, and spiral type of fluorescent lamp tube. With the fluorescent lamp tube of the present invention, the manufacturing of a super compact T1-type fluorescent lamp could be realized, and the fluorescent lamp could be devised and manufactured to be more compact.

Actually, the present invention can have other types of embodiments. The ordinary technical persons who have skills in the present field can make different types of corresponding modifications according to the basic inventive ideas of this application. However, the related changes or alternations in shapes would still fall within the scope of the application as defined by the claims.

## Claims

1. A fluorescent lamp tube, comprising:
lamp filaments (101, 201, 301) arranged respectively at both ends of the fluorescent lamp tube;
tube end portions (102, 202, 302) in which the lamp filaments (101, 201, 301) are enclosed respectively; and
a tube portion (104, 204, 304) interconnecting the tube end portions (102, 202, 302) and having a diameter smaller than that of the tube end portions (102, 202, 302).

2. A fluorescent lamp tube as claimed in claim 1, wherein the tube end portion (102, 202, 302) and the tube portion (104, 204, 304) are connected via a connecting portion (103, 203, 303) having a diameter gradually diminished from the tube end portion (102, 202, 302) to the tube portion (104, 204, 304).

3. A fluorescent lamp tube as claimed in claim 1 or claim 2, wherein the diameter of tube end portion (102, 202, 302) equals that of a conventional fluorescent lamp tube.

4. A fluorescent lamp tube as claimed in any one of the preceding claims, wherein the diameter of the tube portion (104, 204, 304) is 2-12 mm.

5. A fluorescent lamp tube as claimed in -any one of the preceding claims, wherein the tube portion (104, 204, 304) is in a form selected from a group consisting of linear type, U-type, II-type, H-type, Buddha's Hand-type, W-type, SL-type, and spiral type of lamp tube.
